# EUROPÄISCHE PATENTSCHRIFT

(11) **EP 2 223 765 B1**
(45) Veröffentlichungstag und Bekanntmachung des Hinweises auf die Patenterteilung: **01.01.2014**
(21) Anmeldenummer: 10154532.5
(22) Anmeldetag: 24.02.2010
(51) Int. Cl.: B23K 11/30

(54) **Einschwenkvorrichtung eines Kappenfräsers zum Befräsen des Schweißbereichs von Punktschweißelektroden**
Pivoting device of a electrode tip dresser for spot welding
Dispositif de pivotement d'un dispositif de rodage d'embouts d'électrodes de soudure par point

(30) Priorität: 25.02.2009 DE 102009001155
(43) Veröffentlichungstag der Anmeldung: 01.09.2010
(73) Patentinhaber: AEG SVS Schweisstechnik GmbH, 45475 Mülheim/Ruhr (DE)
(72) Erfinder: Holdmann, Dirk, 51149 Köln (DE); Schmidt, Harald, 45144 Essen (DE); Wieczorek, Gary, 45739 Oer Erkenschwick (DE)
(74) Vertreter: Bauer Vorberg Kayser Patentanwälte

(56) Entgegenhaltungen:
- EP-A1- 1 291 114
- DE-A1- 19 849 117
- DE-U1- 20 306 568
- FR-A1- 2 750 631
- US-A1- 2008 317 577

## Beschreibung

Die Erfindung bezieht sich auf eine Einschwenkvorrichtung eines Kappenfräsers zum Befräsen des Schweißbereichs von Punktschweißelektroden nach dem Oberbegriff des Patentanspruchs 1.

Eine derartige Einschwenkvorrichtung ist aus der DE 203 06 568 U1 bekannt.

Kappenfräser werden häufig in der Automobilproduktion eingesetzt, sie sind üblicherweise entlang einer Montagestrecke für Karosserieteile angeordnet und den dort vorgesehenen Schweißrobotern zugeordnet. Die Schweißroboter haben die Aufgabe, durch Punktschweißung Karosserieblechteile miteinander zu verbinden. Hierzu sind typischerweise mit Schweißzangen versehen, deren Zangenbacken mit je einer Punktschweißelektrode ausgerüstet sind. Die Schweißroboter müssen vielfältige Bewegungen ausüben. Sie brauchen für diese Bewegungen einen ausreichenden Freiraum.

Während des Betriebes nutzen sich die Punktschweißelektroden ab. Im Schweißbetrieb tritt insbesondere eine Veränderung der Elektrodenkappen auf. Zumeist bilden sich Wülste am Rand der Elektrodenkappen, die eine Vergrößerung der tatsächlichen Kontaktfläche der Schweißelektrode bewirken. Dies aber führt zu veränderten Schweißbedingungen, da nun die Fläche des Schweißpunktes vergrößert ist. Daneben kann sich beim Verschweißen von verzinkten Karosserieflächen an den Elektrodenkappen eine Verunreinigung, beispielsweise Zinkoxid, anlagern, sie bildet einen ohmschen Widerstand.

Durch die Kappenfräser ist es möglich, die Wirkflächen der Elektroden jeweils wieder aufzuarbeiten. Derartige Kappenfräser sind beispielsweise aus EP 958092 B1, US 6,863597 B2, US 6,666631 B2, DE 19825771 A1 und DE 4213571 C2 bekannt.

Um die Elektroden fräsen zu können, muss sich ein Kappenfräser in Nähe eines Schweißroboters bzw. einer Elektrodenzange und in geeigneter Position hierzu befinden. Ist die Aufbereitung der Elektroden abgeschlossen, stört der Kappenfräser, da er sich im Bewegungsbereich des Schweißroboters befindet. Es ist daher in vielen Installationen bereits so vorgesehen, dass der Kappenfräser mit einer Einschwenkvorrichtung verbunden ist, die ihn normalerweise aus dem Arbeitsbereich des Schweißroboters heraus bewegt und nur für eine Fräsbehandlung in diesen hineinbewegt. Die bekannten Einschwenkvorrichtungen lassen sich allerdings schwierig justieren und nicht immer den Bedingungen anpassen, die konkret bei einer Fertigungsstraße vorliegen. Dabei muss jeder Kappenfräser einzeln mit seiner Einschwenkvorrichtung an die jeweiligen Erfordernisse angepasst werden können. Er muss präzise und sicher anzusteuern sein. Die Bewegung, die er durchführt, muss sich den örtlichen Bedingungen anpassen können und sicher, ausreichend schnell und zuverlässig durchführbar sein.

All dies ist vor dem Hintergrund zu betrachten, dass die Fertigung von Kraftfahrzeugen, insbesondere Karosseriegruppen, ein komplexer Vorgang ist, der möglichst wenig unterbrochen werden soll, weil Betriebsstörungen Produktionsausfälle bedeuten sind und viele Nacharbeiten nach sich ziehen.

Hiervon ausgehend liegt der Erfindung die Aufgabe zugrunde, die Einschwenkvorrichtung der eingangs genannten Art weiterzubilden und eine konstruktiv einfache, kostengünstig zu fertigende Einschwenkvorrichtung eines Kappenfräsers anzugeben, die mit einfachen Mitteln zu realisieren ist, die einfach ansteuerbar ist und sich betriebssicher realisieren lässt, und die sich im Wesentlichen gängiger Komponenten bedient.

Diese Aufgabe wird gelöst durch eine Einschwenkvorrichtung eines Kappenfräsers mit den Merkmalen des Patentanspruchs 1.

Die Einschwenkvorrichtung ist mit einfachen Mitteln aufgebaut. Sie besteht im Wesentlichen aus drei mechanischen Bauteilen, nämlich Grundgestell, Schwenkarm und Mitnehmer sowie aus der Stellvorrichtung. Derartige Stellvorrichtungen werden einsatzfertig von der Industrie angeboten. Sie werden auch als Hubantrieb bezeichnet. Sie haben typischerweise einen Elektromotor, der über ein Untersetzungsgetriebe eine Spindel antreibt, die auf dem Abtriebsweg mit einer Spindelmutter versehen ist, oder sie weisen eine Kombination aus Zahnstange und Ritzel auf.

Die Einschwenkvorrichtung lässt sich bequem praktisch nutzen. Es ist nur einziger Monteur notwendig, um am Aufstellort sie einrichten zu können. Es werden keine komplizierten Hilfsmittel, insbesondere kein tragbarer Computer benötigt, um die Einschwenkvorrichtung einzujustieren oder eine Einstellung zu modifizieren. Der Mitnehmer ist nicht zwangsweise mit dem Arm verbunden. Löst man das Befestigungsmittel, ist der Arm frei bewegbar. Die lineare Stellvorrichtung treibt dann nur den Mitnehmer an. Auf diese Weise kann man den Mitnehmer in eine Endstellung bringen und den Arm in der gewünschten Position fixieren. Vorzugsweise wird man zunächst die Endstellung wählen, die für den Fräsvorgang zutreffend ist, und den Arm dabei so justieren, dass der Kappenfräser sich an einer für den Schweißroboter zu treffenden Position befindet. Diese Position wird im Folgenden als die Arbeitsposition bezeichnet. Die andere Endstellung ist die Ruheposition.

Vorzugsweise ist ein Handrad vorgesehen, mit dem alternativ zum Motor der Schwenkvorgang durchgeführt werden kann. Auf diese Weise kann die Einschwenkvorrichtung eingestellt werden, ohne den Motor mit Spannung versorgen zu müssen. Das Handrad ist in einer Alternative mit der Motorwelle verbunden, die Verbindung ist lösbar und/oder hat einen Freilauf. In einer anderen Alternative ist das Handrad mit einem Getriebe versehen oder im Weg des Getriebes zwischen Motor und Spindelantrieb angeordnet, damit man mit weniger Drehungen ein Verschwenken durchführen kann als mit dem Elektromotor. Es hat sich auch als günstig erwiesen, am Motor einen Unrund vorzusehen, mit dem ein separater Drehantrieb, z.B. ein akkubetriebener Drehschrauber, verbunden werden kann, um beim Einstellvorgang die Drehung des Elektromotors zu ersetzen.

Beide Endpositionen sind durch die mechanische Anschläge bestimmt. In der einen Endposition befindet sich der erste Gegenanschlag des Mitnehmers ist in Kontakt mit dem ersten Anschlag des Grundgestells. In der anderen Endposition ist der zweite Gegenanschlag des Mitnehmers ist in Kontakt mit dem zweiten Anschlag des Grundgestells. Im praktischen Betrieb muss die Einschwenkvorrichtung dann nur noch zwischen ihren beiden Endanschlägen bewegt werden. Der Motor wird in Zusammenhang mit den Endpositionen betätigt, er wird kurz vor oder zumindest mit Erreichen einer Endposition ausgeschaltet. Eine komplizierte Steuerung entfällt.

In vorzugsweiser Weiterbildung ist mindestens einer der Anschläge einstellbar ausgebildet. Dies ermöglicht es, zumindest eine Endposition der Einschwenkvorrichtung innerhalb eines gewissen Bereichs, beispielsweise innerhalb von 30, 20 oder 10°, einzustellen, vorzugsweise kontinuierlich. Auf diese Weise kann auch der gesamte Schwenkwinkel eingestellt werden. Es kann z.B. erreicht werden, dass in jeder der beiden Positionen der Arm nur so weit ausschwenkt, dass er oder der Kappenfräser nicht in Kollision mit einem anderen Teil kommen kann. Die Einstellbarkeit kann z.B. durch austauschbare Anschlagplatten oder durch Verstellen von Schrauben, die die Anschläge tragen, erreicht werden.

Vorzugsweise sind Mittel vorgesehen, um die jeweilige Position des Arms und evtl. auch des Mitnehmers und/oder der Stellvorrichtung zu erfassen. Insbesondere sind zumindest einigen der Anschlägen Sensoren zugeordnet. Weiterhin ist es vorteilhaft, die lineare Stellvorrichtung mit einem Sensor zu versehen. Auch der Grundgestellachse und/oder der Mitnehmerachse kann ein Sensor zugeordnet sein. Auf diese Weise kann die jeweilige Position der Einschwenkvorrichtung zu einem beliebigen Zeitpunkt abgefragt werden. Eine zentrale Produktionssteuerung kann überwachen, dass die Einschwenkvorrichtung in der für den geplanten Ablauf richtigen Position ist. Grundsätzlich ist eine Einbindung der Einschwenkvorrichtung an die zentrale Produktionssteuerung aber nicht unbedingt erforderlich.

Vorzugsweise ist die Grundgestellachse und/oder die Mitnehmerachse elastisch am Grundgestell angeordnet und quer zur Achsrichtung verschiebbar, vorzugsweise im Wesentlichen in Längsrichtung des Grundgestells. Durch diese Elastizität wird ein Motornachlauf nach Kontakt des Anschlags mit dem jeweiligen Gegenanschlag möglich, der Motornachlauf führt zu einer elastischen Verspannung, diese bewirkt eine Einspannung des Armes. Eine derartige elastische Anordnung hat auch den Vorteil, dass eine Kollision des Kappenfräsers oder des Arms mit einem Fremdteil, z. B. einem Karosserieteil, einerseits nicht große Schäden hervorruft und andererseits erfassbar ist. Aufgrund der elastischen Auslenkung bleibt die Anschlagkraft gering. Durch die Auslenkung kann man die Tatsache erfassen, dass eine Kollision stattgefunden hat.

Vorzugsweise ist eine schaltbare Bremse vorgesehen, die dem Bewegungsantrieb zugeordnet ist. Sie ist beispielsweise unmittelbar dem Motor zugeordnet, zwischen Motor und Spindel ausgebildet oder unmittelbar dem Spindelantrieb zugeordnet. Über die schaltbare Bremse wird erreicht, dass bei Stillstand des Motors ein Blockieren der Stellvorrichtung erfolgt. Auf diese Weise wird ein selbsttätiges Ablaufen der Stellvorrichtung verhindert. Vorzugsweise ist die Bremse nicht nur elektrisch, sondern auch per Hand schaltbar und hat einen entsprechenden Handgriff. Dadurch kann bei manuellem Einstellen der Einschwenkvorrichtung die jeweilige Position fixiert werden. Die elektrische Steuerung dieser Bremse ist gegenüber der manuellen Stellmöglichkeit vorrangig. Beispielsweise sind die elektrische und die manuelle Betätigung mechanisch miteinander verbunden, so dass ein mechanisch eingestellter Bremszustand elektrisch aufgehoben werden kann. Vorzugsweise sind die manuelle und die elektrische Betätigung gekoppelt.

Vorzugsweise ist auch der Kappenfräser elastisch mit dem Arm verbunden. Insbesondere ist der Kappenfräser in Richtung der Drehachse seiner Fräseinrichtung oder in y-Richtung beweglich, vorzugsweise elastisch aus einer Nullstellung auslenkbar, direkt oder indirekt mit dem Arm verbunden.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung näher erläutert werden. In dieser Zeichnung zeigen:
Fig. 1: eine Seitenansicht der Einschwenkvorrichtung, jedoch ist der Kappenfräser nicht und ein Arm nur teilweise dargestellt, teilweise schnittbildlich,
Fig. 2: eine Draufsicht auf die Einschwenkvorrichtung nach Figur 1, jedoch ohne lineare Stellvorrichtung,
Fig. 3: eine Ansicht ähnlich Figur 1 für ein zweites Ausführungsbeispiel,
Fig. 4: eine Draufsicht auf die Einschwenkvorrichtung gemäß Figur 3,
Fig. 5: eine Frontansicht, gesehen in negativer x-Richtung, der Einschwenkeinrichtung gemäß Figur 3,
Fig. 6: eine perspektivische Darstellung der Einschwenkeinrichtung gemäß Figur 3,
Fig. 7: eine Seitenansicht wie Figur 3, jedoch von der anderen Seite in y-Richtung gesehen und in einem anderen Bewegungszustand,
Fig. 8: eine Darstellung wie Figur 7, jedoch in einem anderen Bewegungszustand und
Fig. 9: eine Darstellung wie Figur 7, jedoch wiederum in einem anderen Bewegungszustand.

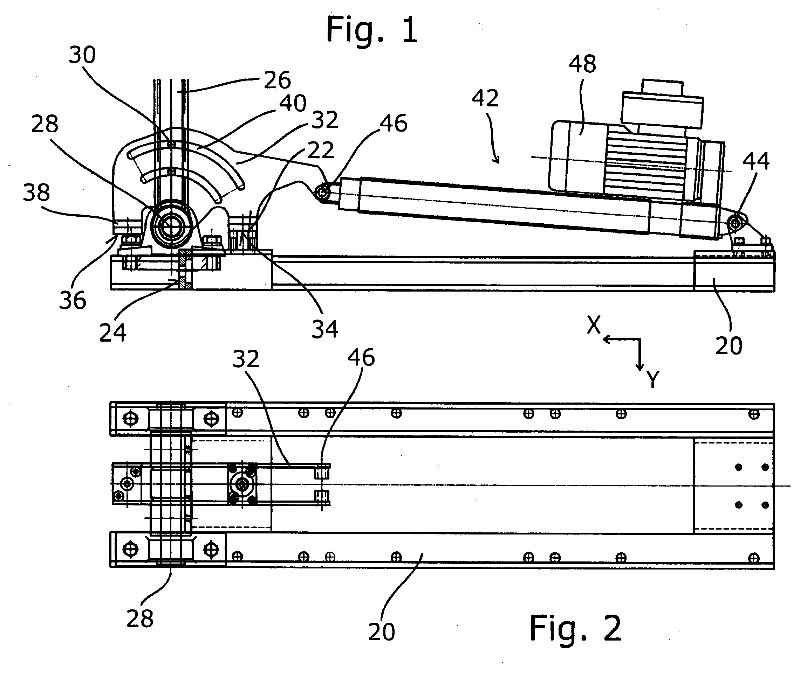

Die Einschwenkeinrichtung nach dem ersten Ausführungsbeispiel mit den Figuren 1 und 2 hat ein Grundgestell 20, das im konkreten Ausführungsbeispiel aus zwei im Wesentlichen baugleichen Längsprofilen, die sich parallel zur x-Richtung erstrecken, und zwei Querverbindern, die sich parallel zur y-Richtung erstrecken, hergestellt ist. Dieses Grundgestell 20 weist einen ersten Anschlag 22 und einen zweiten Anschlag 24 auf.

Am Grundgestell 20 ist ein Arm 26 schwenkbar gelagert, dies erfolgt um eine Schwenkachse 28. Diese Schwenkachse 28 ist an einem Endbereich, in der Figur im linken Endbereich, des Grundgestells 20 vorgesehen. Sie wird durch Lageraugen getragen, die von den Längsprofilen nach oben wegstehen. Sie erstreckt sich parallel zur y-Richtung.

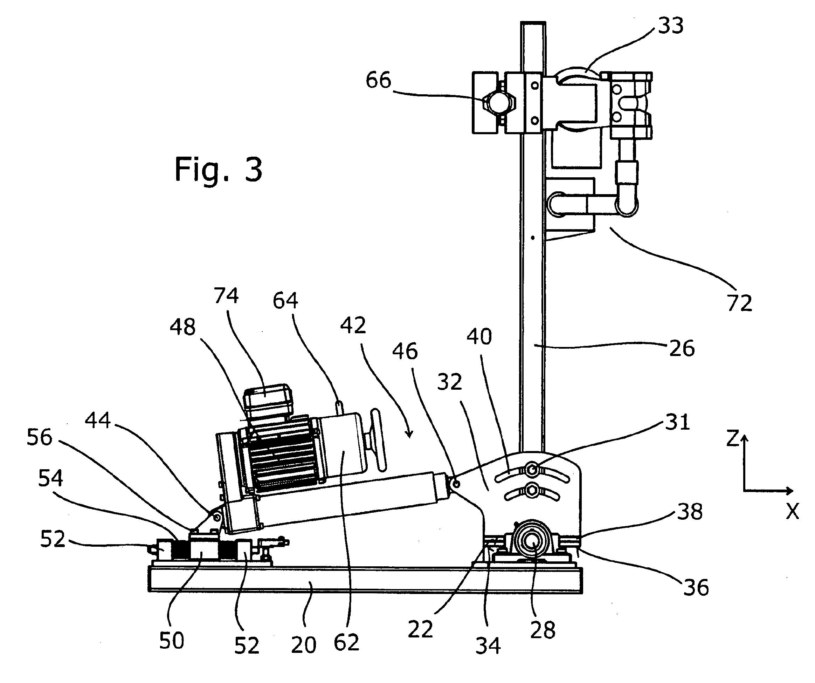

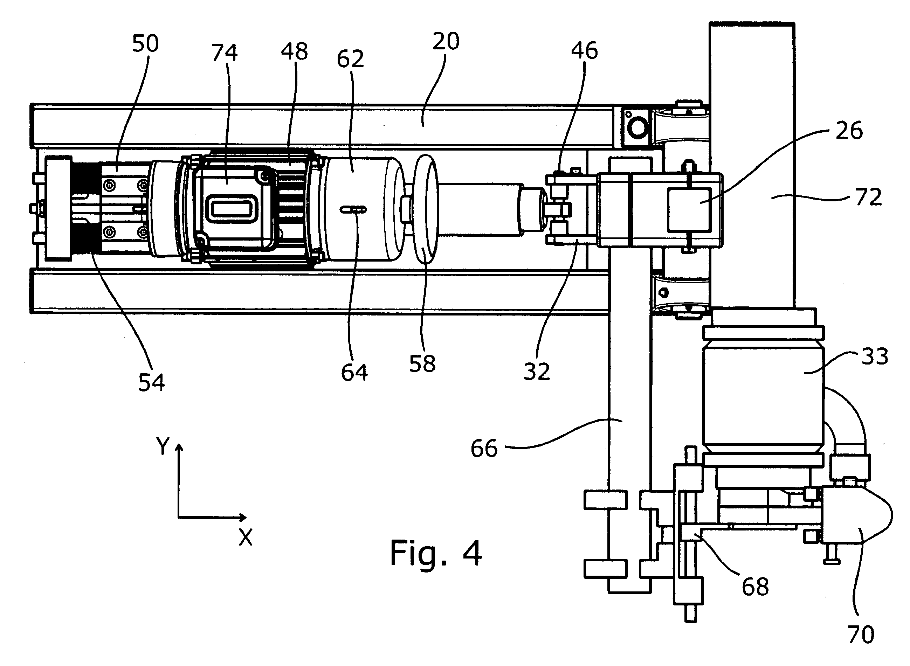

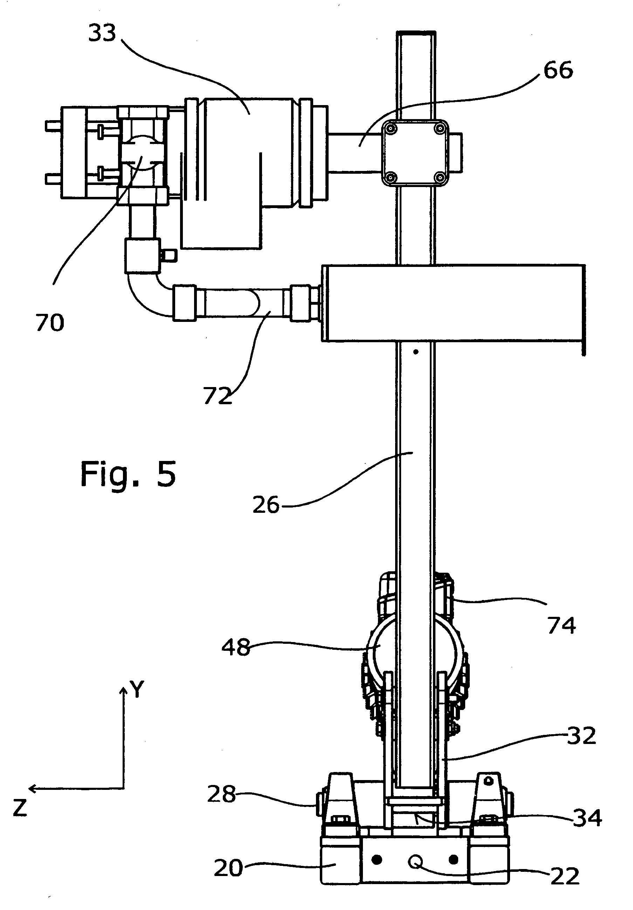

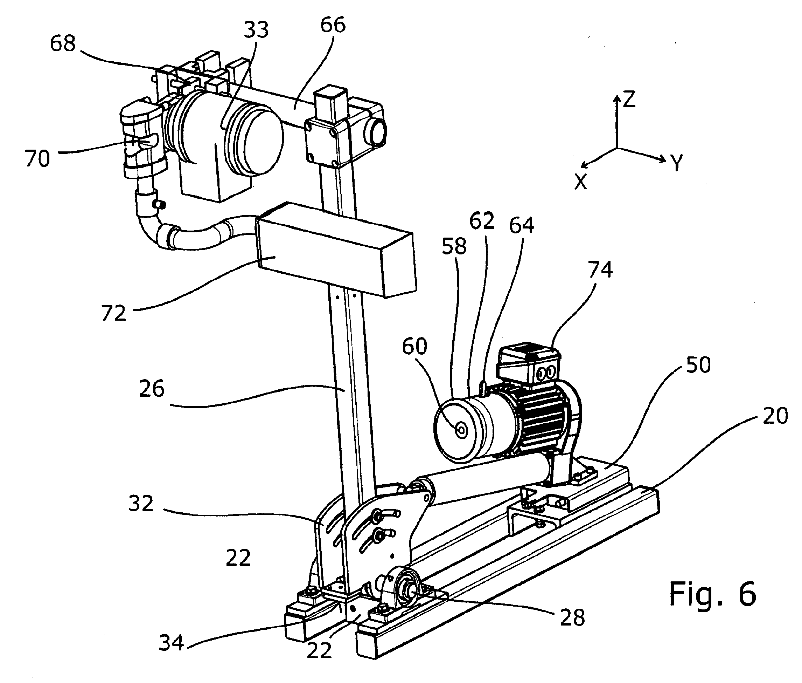

Der Arm 26 ist nicht in seiner vollen Länge dargestellt, hierzu wird auf die anderen Ausführungen verwiesen. Vom Arm 26 stehen zwei Stifte 30 parallel zur y-Richtung und damit parallel zur Schwenkachse 28 vor. Diesen Stiften 30 sind Befestigungsmittel 31 zugeordnet, die hier nicht näher erkennbar sind. Hierzu wird auf das weitere Ausführungsbeispiel nach den Fig. 3-9 verwiesen. Am Arm 26 kann ein Kappenfräser 33 befestigt werden. Auch hierzu wird auf das zweite Ausführungsbeispiel verwiesen. Die Befestigung ist lösbar. Der Kappenfräser 33 kann in unterschiedlichen Positionen befestigt werden, er kann durch unterschiedliche Mittel befestigt werden, beispielsweise durch eine Klemmverbindung. Der Arm 26 hat eine Länge, die etwa der Länge des Grundgestells 20 entspricht.

Um die Schwenkachse 28 ist zudem ein Mitnehmer 32 schwenkbar angeordnet. Im konkreten Ausführungsbeispiel besteht er aus zwei formgleichen Platten, die parallel zueinander und im Abstand voneinander angeordnet sind. Sie sind parallel zur x-z-Ebene angeordnet. Ihr Abstand voneinander in y-Richtung entspricht der Dickenabmessung des Arms 26. Der Mitnehmer 32 weist einen ersten Gegenanschlag 34 auf, der mit dem ersten Anschlag 22 zusammenwirkt. Er weist weiterhin einen zweiten Gegenanschlag 36 auf, der mit dem zweiten Anschlag 24 zusammenwirkt. In der Darstellung nach den Figuren 1 und 2 sind erster Anschlag 22 und erster Gegenanschlag 34 in Kontakt. Es ist zu erkennen, dass der zweite Anschlag 24 und der zweite Gegenanschlag 36 etwa in einem Winkel von 90° voneinander entfernt sind. Die Position des Anschlagortes kann dadurch verändert werden, dass Anschlagplatten 38 ausgetauscht bzw. entfernt oder zugefügt werden. Diese können mindestens einem Anschlag bzw. Gegenanschlag zugeordnet sein. Mehrere Anschlagplatten 38 sind in Figur 1 ersichtlich.

Am Mitnehmer 32 sind zwei bogenförmige, jeweils zur Schwenkachse 28 zentrische Langlöcher 40 vorgesehen. Jeweils ein Stift 30 durchgreift ein Langloch 40. Durch die Befestigungsmittel 31 können Mitnehmer 32 und Arm 26 fest miteinander verbunden werden. Nach einem Lösen der Befestigungsmittel kann der Arm 28 relativ zum Mitnehmer 32 frei verschwenkt werden. Dies erfolgt parallel zur x-z-Ebene. Die Langlöcher 40 erstrecken sich über einen Winkelbereich von etwa 90°. Ein größerer Winkelbereich von 120 oder 150° ist auch im Sinne der Erfindung. Unabhängig von der Relativposition zwischen Mitnehmer 32 und Grundgestell 20 kann somit der Arm 26 in einen Winkel von zumindest 90° frei verstellt und fixiert werden. Von dieser gewählten Position ausgehend erfolgt dann die noch zu beschreibende Verstellbewegung.

Für die Verstellbewegung ist eine lineare Verstellvorrichtung 42 vorgesehen. Sie ist einerseits am Grundgestell 20 um eine Grundgestellachse 44 schwenkbar und andererseits am Mitnehmer 32 um eine Mitnehmerachse 46 schwenkbar angeordnet. Die Grundgestellachse 44 befindet sich an dem Endbereich des Grundgestells 20, der der Schwenkachse 28 gegenüberliegt. Die Stellvorrichtung 42 ist ein aus dem Stand der Technik bekanntes und industriell angebotenes Bauteil. Sie hat beispielsweise eine Spindel und eine Spindelmutter. Die Spindel wird durch einen Elektromotor 48 drehangetrieben, dies erfolgt unter Zwischenschaltung eines Reduziergetriebes. Alternativ kann auch die Spindelmutter angetrieben sein. Alternativ kann auch eine Anordnung mit linearer Zahnstange und Ritzel vorgesehen sein. Weitere Ausführungen sind möglich. Bevorzugt werden mechanische Vorrichtungen. Es werden keine pneumatischen und keine hydraulischen Vorrichtungen für die Stellvorrichtung 42 benutzt. Schwenkachse 28. Sie hat einen Abstand von der Schwenkachse 28, der größer ist als der Radius der Langlöcher 40, vorzugsweise 120 - 250 % dieses Radius. Die Stellvorrichtung bewegt sich parallel zur x-z-Ebene.

Das zweite Ausführungsbeispiel nach den Figuren 3 bis 9 wird nun insoweit beschrieben, als es sich vom ersten Ausführungsbeispiel unterscheidet.

Die Grundgestellachse 44 ist nun nicht starr am Grundgestell 20 festgelegt, sondern in x-Richtung verschiebbar. Hierzu ist ein Schlitten 50 vorgesehen, der sich in x-Richtung bewegen kann, in seiner Bewegung bleibt er parallel zu x-y-Ebene. Er befindet sich zwischen zwei Böcken 52, die mit dem Grundgestell 20 fest verbunden sind. Zwischen diesen beiden Böcken 52 erstrecken sich parallel zur x-Richtung Stangen, entlang dieser Stangen ist der Schlitten 50 geführt und verschiebbar. Die Stangen werden von Schraubenfedern 54 umgriffen, die als Druckfedern ausgebildet sind. Sie halten den Schlitten 50 normalerweise in einer Mittelposition zwischen den beiden Böcken 52, wie in Fig. 3 dargestellt. Innerhalb des von den Federn zugelassenen Bewegungshubs kann sich der Schlitten 50 parallel zur x-Richtung verschieben. Dadurch ist es möglich, dass der Arm 26 blockiert werden kann, dennoch aber die Stellvorrichtung 42 weiter betätigt werden kann, jedenfalls innerhalb des elastischen Weges, den der Schlitten 50 zurücklegen kann.

Dem Schlitten ist ein Sensor 56 zugeordnet. Dieser spricht an, sobald der Schlitten 50 seine Neutralposition verlässt. Auf diese Weise kann eine Überlast und das Erreichen eines Endanschlags erfasst werden.

Dem Elektromotor 48 ist ein Handrad 58 zugeordnet. Mit Hilfe des Handrades 58 kann der Elektromotor gedreht werden. Vorzugsweise ist ein Freilauf, beispielsweise ein beidseitig wirkendes Kugelgesperre zwischengeschaltet, damit das Handrad 58 nicht vom Motor gedreht wird. Über das Handrad 58 ist es möglich manuell eine Verstellbewegung der Stellvorrichtung 42 durchzuführen. Auf diese Weise können die Endpositionen des Arms 26 angefahren und auch eingestellt werden. Dies alles ist ohne elektrische Spannung möglich, also rein manuell.

In der Ausführung ist das Handrad 58 unmittelbar dem Motor zugeordnet. Dies bedeutet, dass relativ viele Umdrehungen zwischen den beiden Endanschlägen des Arms 26 durchgeführt werden müssen. Um dies zu verbessern ist es möglich, das Handrad 58 entweder mit einem eigenen Getriebe zu versehen oder im Übersetzungsweg zwischen Motor und Spindel anzuordnen. Weiterhin kann ein Unrund 60 am Elektromotor 48 vorgesehen sein. Damit kann unabhängig vom Handrad 58 der Motor gedreht werden. Dies kann beispielsweise mit einem speziellen Drehwerkzeug, das auch als elektrischer Drehantrieb ausgebildet sein kann, beispielsweise ein Akkuschrauber, erfolgen.

Schließlich ist der Stellvorrichtung 42 eine schaltbare Bremse 62 zugeordnet. Im Ausführungsbeispiel nach den Figuren 3 bis 9 ist sie zwischen Handrad 58 und Elektromotor 48 angeordnet. Sie ist sowohl elektrisch als auch manuell schaltbar. Die Bremse 62 ist freigeschaltet und nicht aktiv, wenn der Elektromotor 48 bestromt ist und aktiv antreibt. Die Bremse 62 ist aktiv und bremst jegliche unerwünschte Verstellung der Stellvorrichtung 42, wenn der Elektromotor 48 nicht aktiv ist. Die Bremse 62 hat einen Handhebel 64, mit dem sie bei ruhendem Motor 48 gelöst und aktiviert werden kann. Dieser Handhebel 64 befindet sich in der Nähe des Handrades 58. Eine mit dem Handrad 58 erreichte Bewegungsposition kann durch Betätigen des Handhebels 64 fixiert werden. Dies ermöglicht es beispielsweise, die Befestigungsmittel 31 in ihrer Position zu verändern, bzw. den Arm 26 einzustellen, ohne dass die Position der Stellvorrichtung 42 verändert werden kann.

Eine ähnliche, vorzugsweise baugleiche Schlittenanordnung wie im Bereich der Grundgestellachse 44 ist auch am Kappenfräser 33 vorgesehen. Der Kappenfräser 33 ist im Ausführungsbeispiel nicht unmittelbar am Arm 26, sondern an einem Rohr 66 befestigt, das quer, nämlich parallel zur y-Richtung, vom Arm 26 wegsteht. Zwischen diesem Rohr 66 und dem Kappenfräser 32 ist eine zweite Schlittenanordnung mit einem zweiten Schlitten 68 vorgesehen. Auch er hat Stangen, die sich parallel zur y-Richtung erstrecken und auf diesen getragene Federn, die allerdings in der Darstellung nicht erkennbar sind. Erreicht wird die Möglichkeit, dass der Kappenfräser 32 parallel zu y-Richtung elastisch aus einer Mittelstellung heraus verschiebbar ist. Der Kappenfräser 33 hat eine Fräseinrichtung 70, die nach dem Stand der Technik ausgeführt ist. Er hat eine Spänesammelvorrichtung 72. Ihr Sammelbehälter ist unmittelbar am Arm 26 befestigt.

Eine Steuervorrichtung für die Einschwenkvorrichtung ist in einem Gehäuse 74 untergebracht.

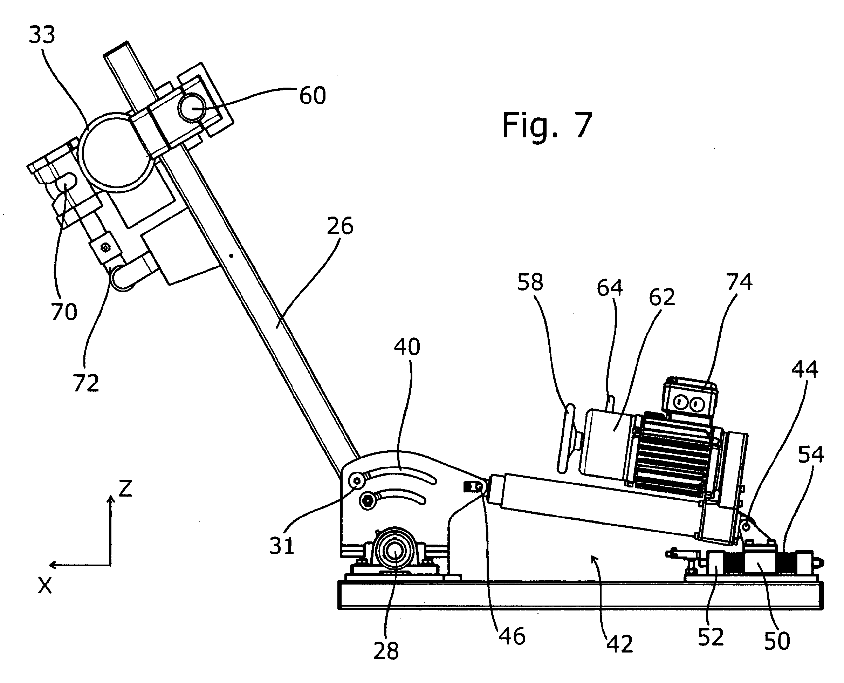

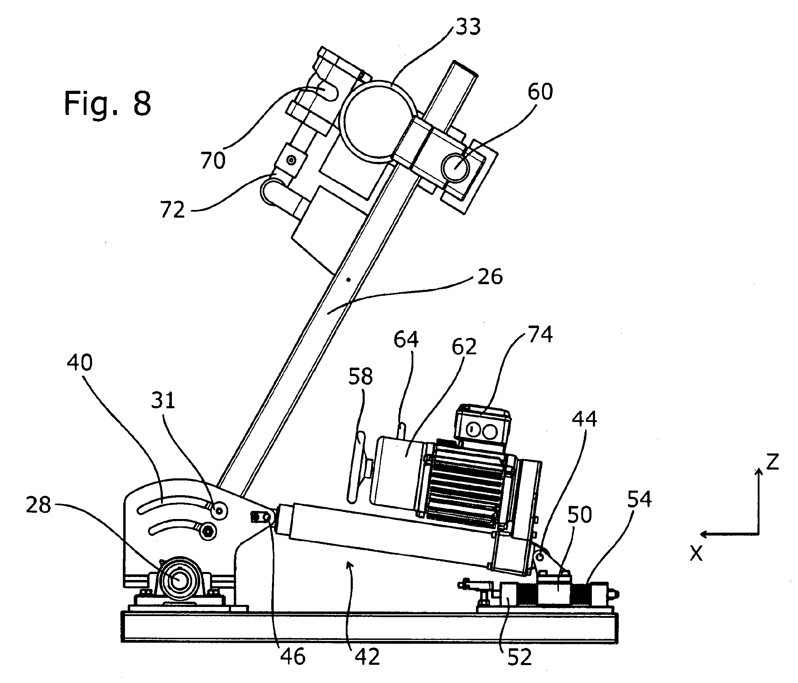

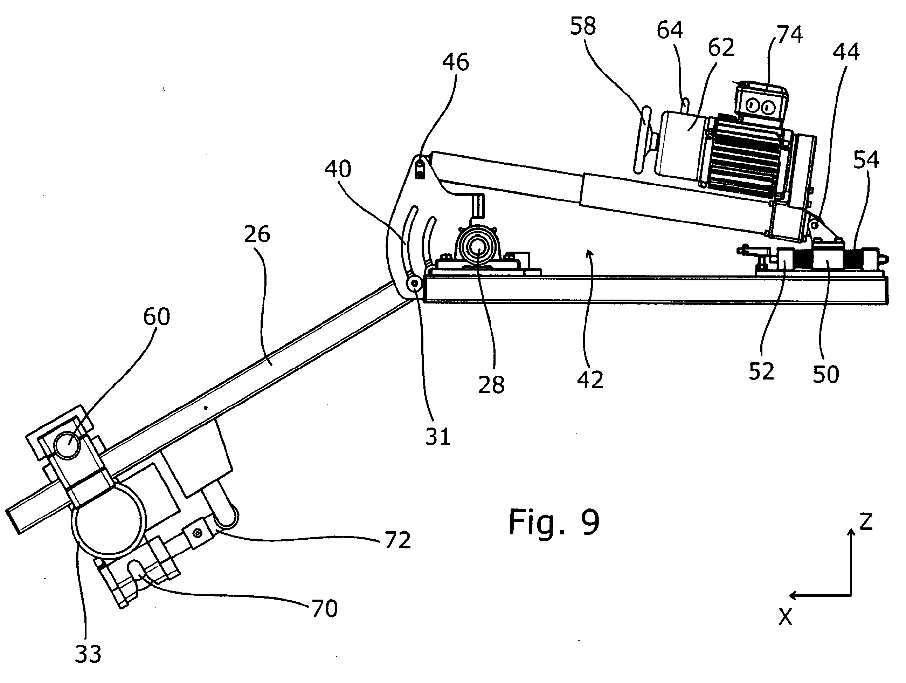

Figur 7 zeigt den eingeschwenkten Zustand für den Fall, dass die Stifte 30 in x-Richtung sich an der vordersten Stelle des Langlaufs 40 befinden. Figur 8 zeigt den entgegengesetzten Fall, wenn sich die Stifte 30 am motorseitigen Ende des Langlochs 40 befinden. Ausgehend von der Position gemäß Figur 7 kann der Arm 26 soweit verschwenkt werden, dass er unterhalb einer Ebene liegt, die das Grundgestell 20 definiert, nämlich ca. 20° bis 30° unterhalb dieser Ebene. Der gesamte Bewegungsbereich im zweiten Ausführungsbeispiel 26 erstreckt sich damit über etwa 150°, wobei die aktive Schwenkbewegung durch die Stellvorrichtung 42 etwa 90°, wie ein Vergleich der Figuren 7 und 9 zeigt, ausmacht.

## Patentansprüche

1. Einschwenkvorrichtung eines Kappenfräsers zum Befräsen des Schweißbereichs von Punktschweißelektroden, die aufweist
- ein Grundgestell (20), das einen ersten Anschlag (22) und einen zweiten Anschlag (24) sowie eine Schwenkachse (28) hat,
- einen Arm (26), an dem der Kappenfräser befestigt ist,
- einen Mitnehmer (32), der um die Schwenkachse (28) schwenkbar angeordnet ist, der einen mit dem ersten Anschlag (22) zusammenwirkenden ersten Gegenanschlag (34) und einen mit dem zweiten Anschlag (24) zusammenwirkenden zweiten Gegenanschlag (36) aufweist, und
- eine Stellvorrichtung (42), die einerseits am Grundgestell (20) um eine Grundgestellachse (44) und andererseits am Mitnehmer (32) um eine Mitnehmerachse (46) schwenkbar angelenkt ist,
**dadurch gekennzeichnet, dass** der Arm (26) um die Schwenkachse (28) schwenkbar mit dem Grundgestell (20) verbunden ist, dass der Arm (26) einen Stift (30) aufweist, dem ein Befestigungsmittel zugeordnet ist, dass der Mitnehmer (32) mindestens ein bogenförmiges, zur Schwenkachse (28) zentrisches Langloch (40) aufweist, durch das der Stift (30) hindurch greift, dass sich der Mitnehmer (32) zwischen dem Arm (26) und dem Befestigungsmittel befindet, und dass die Stellvorrichtung (42) eine lineare Stellvorrichtung (42) ist.

2. Einschwenkvorrichtung nach Anspruch 1, **dadurch gekennzeichnet, dass** zumindest ein Anschlag aus der folgenden Gruppe einstellbar ausgebildet ist: erster Anschlag (22), zweiter Anschlag (24), erster Gegenanschlag (34) und zweiter Gegenanschlag.

3. Einschwenkvorrichtung nach einem der vorangegangenen Ansprüche, **dadurch gekennzeichnet, dass** eine Steuereinrichtung vorgesehen ist, die der Stellvorrichtung (42) zugeordnet ist.

4. Einschwenkvorrichtung nach einem der vorangegangenen Ansprüche, **dadurch gekennzeichnet, dass** die Stellvorrichtung (42) eine Spindel mit zugehöriger Spindelmotor oder eine Zahnstange mit zugehörigem Ritzel aufweist.

5. Einschwenkvorrichtung nach einem der vorangegangenen Ansprüche, **dadurch gekennzeichnet, dass** sich das Langloch (40) über einen Winkelbereich zwischen 45 und 120 Grad insbesondere etwa 60° bis 90° Grad, um die Schwenkachse (28) erstreckt.

6. Einschwenkvorrichtung nach einem der vorangegangenen Ansprüche, **dadurch gekennzeichnet, dass** die Schwenkachse (28) in Nähe eines ersten Endbereichs des Grundgestells (20) und die Grundgestellachse (44) in Nähe eines gegenüberliegenden, zweiten Endbereichs des Grundgestells (20) angeordnet sind.

7. Einschwenkvorrichtung nach einem der vorangegangenen Ansprüche, **dadurch gekennzeichnet, dass** der Abstand von Schwenkachse (28) und Grundgestellachse (44) zwischen 50% und 200% der Länge des Schwenkarms beträgt, wobei diese Länge zwischen der Schwenkachse (28) und einem freien Ende des Schwenkarms bestimmt ist.

8. Einschwenkvorrichtung nach einem der vorangegangenen Ansprüche, **dadurch gekennzeichnet, dass** der Kappenfräser einen Frästeil und einen Spansammelteil aufweist, und dass Frästeil und Spansammelteil am Arm (26) befestigt sind.

9. Einschwenkvorrichtung nach einem der vorangegangenen Ansprüche, **dadurch gekennzeichnet, dass** die Grundgesteachse und/oder die Mitnehmerachse elastisch am Grundgestell angeordnet und in Längsrichtung des Grundgestells, quer zur Achsrichtung, elastisch verschiebbar ist.

10. Einschwenkvorrichtung nach einem der vorangegangenen Ansprüche, **dadurch gekennzeichnet, dass** zwischen Grundgestell (20) und Stellvorrichtung (42) mindestens ein Schlitten (50) vorgesehen ist, der vorzugsweise in x-Richtung bewegbar ist.

11. Einschwenkvorrichtung nach einem der vorangegangenen Ansprüche, **dadurch gekennzeichnet, dass** der Stellvorrichtung (42) ein Handrad (58), zugeordnet ist, mit dem die Stellvorrichtung (42) manuell verstellbar ist.

12. Einschwenkvorrichtung nach einem der vorangegangenen Ansprüche, **dadurch gekennzeichnet, dass** der Stellvorrichtung (42) eine Bremse (62) zugeordnet ist, die sowohl elektrisch, als auch manuell mittels eines Handhebels (64) betätigbar ist.

## Claims

1. A pivoting device of a cap cutter for cutting the welding region of spot welding electrodes, comprising
- a base frame (20) having a first stop (22) and a second stop (24) as well as a pivot axis (28),
- an arm (26) to which the cap cutter is attached,
- a driver (32) which is disposed so as to be pivotable around the pivot axis (28) and has a first counter stop (34) cooperating with the first stop (22) and a second counter stop (36) cooperating with the second stop (24), and
- an actuating device (42) which is pivotably hinged, on the one hand, to the base frame (20) about a base frame axis (44) and, on the other hand, to the driver (32) about a driver axis (46),
**characterised in that** the arm (26) is connected, pivotable about the pivot axis (28), to the base frame (20), that the arm (26) comprises a pin (30) to which a fastener is assigned, that the driver (32) comprises at least one arc-shaped elongated hole (40) centrical to the pivot axis (28), through which the pin (30) extends, that the driver (32) is located between the arm (26) and the fastener, and that the actuating device (42) is a linear actuating device (42).

2. The pivoting device according to claim 1, **characterised in that** at least one stop from the following group is configured to be adjustable: first stop (22), second stop (24), first counter stop (34), and second counter stop.

3. The pivoting device according to any one of the preceding claims, **characterised in that** a control device is provided that is assigned to the actuating device (42).

4. The pivoting device according to any one of the preceding claims, **characterised in that** the actuating device (42) comprises a spindle with an associated spindle motor or a gear rack with an associated pinion.

5. The pivoting device according to any one of the preceding claims, **characterised in that** the elongated hole (40) extends over an angular range between 45° and 120°, in particular about 60° to 90°, around the pivot axis (28).

6. The pivoting device according to any one of the preceding claims, **characterised in that** the pivot axis (28) is disposed in the vicinity of a first end portion of the base frame (20), and the base frame axis (44) in the vicinity of an opposite second end portion of the base frame (20).

7. The pivoting device according to any one of the preceding claims, **characterised in that** the distance of the pivot axis (28) and the base frame axis (44) is between 50% and 200% of the length of the pivot arm, this length being determined between the pivot axis (28) and a free end of the pivot arm.

8. The pivoting device according to any one of the preceding claims, **characterised in that** the cap cutter comprises a cutting part and a chip-collecting part, and that the cutting part and the chip-collecting part are attached to the arm (26).

9. The pivoting device according to any one of the preceding claims, **characterised in that** the base frame axis and/or the driver axis are resiliently disposed on the base frame, and are resiliently displaceable in the longitudinal direction of the base frame, transversely to the direction of the axis.

10. The pivoting device according to any one of the preceding claims, **characterised in that** at least one slide (50), which is preferably moveable in the x-direction, is provided between the base frame (20) and the actuating device (42).

11. The pivoting device according to any one of the preceding claims, **characterised in that** a hand wheel (58), with which the actuating device (42) can be manually adjusted, is assigned to the actuating device (42).

12. The pivoting device according to any one of the preceding claims, **characterised in that** a brake (62), which can be actuated both electrically as well as manually by means of a hand lever (64), is assigned to the actuating device (42).

## Revendications

1. Dispositif de pivotement vers l'intérieur d'une fraise de capuchon destinée à fraiser la zone de soudage d'électrodes de soudage par points, comprenant
- un bâti de base (20) qui comprend une première butée (22) et une deuxième butée (24) ainsi qu'un axe de pivotement (28),
- un bras (26) sur lequel est fixée ladite fraise de capuchon,
- un entraîneur (32) disposé à pivotement autour dudit axe de pivotement (28) et qui présente une première contre-butée (34) agissant de concert avec ladite première butée (22) ainsi qu'une deuxième contre-butée (36) agissant de concert avec ladite deuxième butée (24), et
- un dispositif de réglage (42) qui est articulé à pivotement d'une part sur ledit bâti de base (20) autour d'un axe de bâti de base (44) et d'autre part sur ledit entraîneur (32) autour d'un axe d'entraîneur (46),
- **caractérisé par le fait que** ledit bras (26) est relié au bâti de base (20) de manière à pouvoir pivoter autour de l'axe de pivotement (28), que ledit bras (26) comprend une goupille (30) à laquelle est associé un moyen de fixation, que ledit entraîneur (32) présente au moins un trou oblong (40) en arc qui est centré par rapport à l'axe de pivotement (28) et qui est traversé par ladite goupille (30), que ledit entraîneur (32) est situé entre le bras (26) et le moyen de fixation et que ledit dispositif de réglage (42) est un dispositif de réglage linéaire (42).

2. Dispositif de pivotement vers l'intérieur selon la revendication 1, **caractérisé par le fait qu'**au moins une butée du groupe suivant est réalisée de manière à pouvoir être réglée : première butée (22), deuxième butée (24), première contre-butée (34) et deuxième contre-butée.

3. Dispositif de pivotement vers l'intérieur selon l'une quelconque des revendications précédentes, **caractérisé par le fait qu'**un dispositif de commande est prévu qui est associé audit dispositif de réglage (42).

4. Dispositif de pivotement vers l'intérieur selon l'une quelconque des revendications précédentes, **caractérisé par le fait que** le dispositif de réglage (42) comprend une broche ayant un moteur broche associé ou une crémaillère ayant un pignon associé.

5. Dispositif de pivotement vers l'intérieur selon l'une quelconque des revendications précédentes, **caractérisé par le fait que** ledit trou oblong (40) s'étend sur une plage angulaire comprise entre 45 et 120 degrés, en particulier entre environ 60 et 90 degrés, autour de l'axe de pivotement (28).

6. Dispositif de pivotement vers l'intérieur selon l'une quelconque des revendications précédentes, **caractérisé par le fait que** ledit axe de pivotement (28) est disposé à proximité d'une première zone d'extrémité du bâti de base (20) et ledit axe de bâti de base (44) est disposé à proximité d'une seconde zone d'extrémité opposée du bâti de base (20).

7. Dispositif de pivotement vers l'intérieur selon l'une quelconque des revendications précédentes, **caractérisé par le fait que** la distance séparant ledit axe de pivotement (28) et ledit axe de bâti de base (44) est comprise entre 50 % et 200 % de la longueur du bras de pivotement, cette longueur étant déterminée entre ledit axe de pivotement (28) et une extrémité libre du bras de pivotement.

8. Dispositif de pivotement vers l'intérieur selon l'une quelconque des revendications précédentes, **caractérisé par le fait que** la fraise de capuchon comprend une partie de fraisage et une partie collectrice de copeaux, et que lesdites parties de fraisage et collectrice de copeaux sont fixées sur le bras (26).

9. Dispositif de pivotement vers l'intérieur selon l'une quelconque des revendications précédentes, **caractérisé par le fait que** ledit axe de bâti de base et/ou ledit axe d'entraîneur est disposé élastiquement sur le bâti de base et est élastiquement déplaçable dans la direction longitudinale du bâti de base, transversalement à la direction axiale.

10. Dispositif de pivotement vers l'intérieur selon l'une quelconque des revendications précédentes, **caractérisé par le fait qu'**au moins un chariot (50) qui, de préférence, est déplaçable dans la direction x est prévu entre le bâti de base (20) et le dispositif de réglage (42).

11. Dispositif de pivotement vers l'intérieur selon l'une quelconque des revendications précédentes, **caractérisé par le fait qu'**audit dispositif de réglage (42) est associé un volant à main (58) au moyen duquel le dispositif de réglage (42) peut être réglé manuellement.

12. Dispositif de pivotement vers l'intérieur selon l'une quelconque des revendications précédentes, **caractérisé par le fait qu'**au dispositif de réglage (42) est associé un frein (62) qui peut être actionné aussi bien électriquement que manuellement au moyen d'un levier à main (64).
